(19) Europäisches Patentamt
European Patent Office
Office européen des brevets

(11) **EP 4 636 353 A1**

(12) **EUROPÄISCHE PATENTANMELDUNG**

(43) Veröffentlichungstag:
**22.10.2025 Patentblatt 2025/43**

(21) Anmeldenummer: **24171354.4**

(22) Anmeldetag: **19.04.2024**

(51) Internationale Patentklassifikation (IPC):
**G01B 11/30** (2006.01)     **G01N 21/88** (2006.01)
**G01N 21/47** (2006.01)

(52) Gemeinsame Patentklassifikation (CPC):
**G01B 11/303**; G01N 2021/479

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Fraunhofer-Gesellschaft zur Förderung der angewandten Forschung e.V. 80686 München (DE)**

(72) Erfinder:
• CHEN, Lili
  01067 Dresden (DE)
• CIKALOVA, Ulana
  01471 Radeburg (DE)
• BENDJUS, Beatrice
  01067 Dresden (DE)

(74) Vertreter: **Friese Goeden Patentanwälte PartGmbB
Widenmayerstraße 49
80538 München (DE)**

(54) **VORRICHTUNG UND VERFAHREN ZUR CHARAKTERISIERUNG EINER OBERFLÄCHE EINER PROBE**

(57)     Die Erfindung betrifft eine Vorrichtung (100) zur Charakterisierung einer Oberfläche (102) einer Probe (104) aufweisend:

einen Laser (106), welcher dazu eingerichtet ist, die Oberfläche (102) der Probe (104) mit einem inzidenten Laserstrahl (118) zu bestrahlen;

einen Detektor (108), welcher dazu eingerichtet ist, zumindest einen Teil des von der Oberfläche (102) der Probe (104) reflektierten Laserstrahls (120) zu erfassen;

**dadurch gekennzeichnet, dass**

die Vorrichtung (100) weiterhin zumindest eine gemeinsame Linse (112 aufweist,

wobei der inzidente Laserstrahl (118) und der reflektierte Laserstrahl (120) jeweils durch die gemeinsame Linse (112) gelenkt werden.

Fig. 1

EP 4 636 353 A1

**Beschreibung**

Die Anmeldung betrifft eine Vorrichtung zur Charakterisierung einer Oberfläche einer Probe. Weiterhin betrifft die vorliegende Erfindung ein Verfahren zur Charakterisierung einer Oberfläche einer Probe.

Die Charakterisierung von Probenoberflächen dient zur Bestimmung der Oberflächeneigenschaften, insbesondere der Oberflächentopographie, auch als der Oberflächentextur oder der Oberflächenbeschaffenheit, denn die Oberflächentopographie beeinflusst maßgeblich die mechanischen und physikalischen Eigenschaften, wie z.B. Reibung, Haftung, Oxidation, thermische und elektrische Leitfähigkeit. Solche Eigenschaften sind insbesondere bei Materialien, die in fortgeschrittenen Technologien und Geräten Verwendung finden (z. B. fortschrittliche Beschichtungen, Lager, thermische, optische und elektronische/Halbleitergeräte), entscheidend für die Performance: Beispielsweise führt eine erhöhte Oberflächenrauheit in der Regel zu einer erhöhten Reibung zwischen zwei sich berührenden Teilen. Ein höherer Reibungskoeffizient führt wiederum zu beschleunigtem Verschleiß und verkürzter Lebensdauer. Kleine Unregelmäßigkeiten in Halbleiteroberflächen können Ladungslokalisierung und ungleichmäßige elektrische Eigenschaften verursachen. Die Beschaffenheit der Oberfläche unterscheidet sich oft aufgrund von Oxidation, Oberflächenspannung, Verunreinigungen oder Verarbeitungsprozessen von der des Kernbereichs. Auch können Materialvorbereitungsmethoden wie mechanisches oder chemisches Polieren oder Ätzen zu Oberflächendefekten und Oberflächenrauheiten führen.

Vor diesem Hintergrund sind messtechnische Instrumente und Methoden erforderlich, um die Oberflächenmorphologie zu bewerten und ihre Auswirkungen auf Bauteileigenschaften wie Leistung, Zuverlässigkeit und Lebensdauer zu bestimmen: Je früher Oberflächenfehler erkannt und die Oberflächentopographie kontrolliert wird, desto größer ist der Nutzen, insbesondere mit Hinblick auf die Einsparung von Kosten und Energie für die Weiterverarbeitung der defekten Produkte, was auch dem Umweltschutz und der nachhaltigen Entwicklung zugutekommt. Verschiedene Verfahren sind aus dem Stand der Technik bekannt, wie Rastersondenmikroskopie, Rasterelektronenmikroskopie, Weißlichtinterferometrie oder Konfokalmikrospie.

Ein vielversprechendes Verfahren ist die Laser-Speckle-Photometrie (LSP). Dies ist eine berührungslose, nichtinvasive und zerstörungsfreie Überwachungstechnik, welche die Charakterisierung von Oberflächen durch die Erkennung und Analyse statischer oder zeitaufgelöster dynamischer Speckle-Muster ermöglicht. Bei der Laser-Speckle-Photometrie wird eine Oberfläche mit einem inzidenten Laserstrahl bestrahlt. Durch Reflexion an der Oberfläche entstehen Interferenzmuster, die sogenannten Speckles. Diese werden mit Hilfe eines Detektors, wie beispielweise einem CMOS-Sensor oder einem CCD-Sensor, aufgenommen. Aus den Speckles kann die Oberflächentopographie ermittelt werden, sodass die Oberflächeneigenschaften, wie beispielweise die Rauheit, ermittelt werden können.

Aus der DE 10 2014 224 852 A1 ist beispielsweise eine Vorrichtung für die Ausführung eines LSP-Verfahrens bekannt, bei der der inzidente Laserstrahl durch eine erste Linse geformt bzw. gelenkt und dadurch auf die Proben-Oberfläche gerichtet wird. Zumindest ein Teil des von der Oberfläche der Probe reflektierten Laserstrahls wird durch eine zweite Linse auf einen Detektor 3 gelenkt. Problemtisch bei dieser Ausführung ist es, dass mindestens zwei Linsen zur Lenkung des inzidenten Laserstrahls und des reflektierten Laserstrahls notwendig sind. Diese mindestens zwei Linsen müssen auch entsprechend unabhängig voneinander fokussiert und kontrolliert werden, um einerseits den inzidenten Laserstrahl auf der Oberfläche der Probe zu fokussieren und anderseits zumindest einen Teil des reflektierten Laserstrahl auf den Detektor zu fokussieren.

Der vorliegenden Erfindung liegt somit die Aufgabe zugrunde, eine Vorrichtung der eingangs genannter Art derart weiterzuentwickeln, dass der Aufbau und/oder der Betrieb vereinfacht werden.

Diese Aufgabe kann durch eine Vorrichtung nach Anspruch 1 sowie durch ein Verfahren nach Anspruch 12 gelöst werden. Mögliche vorteilhafte Weiterbildungen der Erfindung finden sich in den Unteransprüchen.

Gemäß einem ersten Aspekt der vorliegenden Erfindung wird eine Vorrichtung zur Charakterisierung einer Oberfläche einer Probe beschrieben. Die Vorrichtung weist einen Laser und einen Detektor auf, wobei der Laser dazu eingerichtet ist, die Oberfläche der Probe mit einem inzidenten Laserstrahl zu bestrahlen, und wobei der Detektor dazu eingerichtet ist, zumindest einen Teil des von der Oberfläche der Probe reflektierten Laserstrahls zu erfassen.

In Gegensatz zu der aus dem Stand der Technik bekannten Vorrichtung ist nun vorgesehen, dass die Vorrichtung weiterhin zumindest eine gemeinsame Linse aufweist, wobei der inzidente Laserstrahl und der reflektierte Laserstrahl jeweils durch die gemeinsame Linse gelenkt werden.

Gemäß einem zweiten Aspekt der Erfindung wird ein Verfahren zur Charakterisierung einer Oberfläche einer Probe beschrieben. Das Verfahren weist folgende Schritte auf:

    a1) Bestrahlen der Oberfläche der Probe mit einem inzidenten Laserstrahl;
    b) Erfassen zumindest eines Teils eines von der Oberfläche der Probe reflektierten Laserstrahls mit einem Detektor.

Das Verfahren kann dadurch gekennzeichnet sein, dass der Laserstrahl und der reflektierte Laserstrahl durch zumindest eine gemeinsame Linse gelenkt werden.

Es ist also vorgesehen, dass zumindest eine gemeinsame Linse bzw. zumindest ein gemeinsames Objektiv oder zumindest ein Linsensystem vorhanden ist, durch welche sowohl die inzidente Laserstrahlung als auch die reflektierte Laserstrahlung gelenkt bzw. fokussiert werden. Es werden also in Gegensatz zum Stand der Technik keine zwei separaten Linsen zur jeweiligen Fokussierung der inzidenten und der reflektierten Laserstrahlung benötigt, sondern nur eine gemeinsame Linse, welche beide Strahlen lenkt und auf der Oberfläche der Probe bzw. auf dem Detektor fokussiert. Mit anderen Worten sieht die Erfindung vor, eine konfokale Optik zur Lenkung sowohl der inzidenten Laserstrahlung als auch der von der Oberfläche der Probe reflektierte Laserstrahlung einzusetzen. Dadurch sind der Aufbau, der Betrieb und die Instandhaltung der Vorrichtung zur Durchführung der Oberflächencharakterisierung, insbesondere durch LSP, dank des Vorhandenseins der gemeinsamen Linse vereinfacht.

Die gemeinsame Linse, welche eine konfokale Optik bildet, kann beispielsweise Teil eines komplexeren optischen Systems sein, wie beispielsweise ein Stereomikroskopsystem. Beispielsweise kann die Vorrichtung ein Stereomikroskopsystem mit einem ersten Okularkanal und einem zweiten Okularkanal aufweisen, wobei der Laser mit dem ersten Okularkanal gekoppelt ist und der Detektor an dem zweiten Okularkanal angeschlossen ist, wobei die zumindest eine gemeinsame Linse an der von dem Laser abgewandten Seite des ersten Okularkanals und an der von dem Detektor abgewandten Seite des zweiten Okularkanals angeordnet ist. Dementsprechende geht der inzidente Laserstrahl durch den ersten Okularkanal hindurch und der reflektierte Laserstrahl durch den zweiten Okularkanal hindurch. Der erste und der zweite Okularkanal können weitere Linsen aufweisen, die beispielsweise zur Fokussierung des inzidenten Laserstrahls und/oder des reflektierten Laserstrahls eingerichtet sind. Auch kann der zweite Okularkanal weitere Linsen aufweisen, wobei diese weiteren Linsen zum Zwecke der Vergrößerung eingerichtet sind.

Dadurch ist möglich, an sich bekannte Vorrichtungen, wie beispielsweise ein Stereomikroskopsystem, zur Charakterisierung der Oberfläche der Probe einfach und effizient einzusetzen. Der Fokus dieser Ausführungsform liegt in der Kombination der LSP mit einem Stereomikroskop, d. h. im Anschließen der beiden Okularkanäle des Stereomikroskopsystems an dem Laser und an dem Detektor, wodurch die optischen Pfade der optischen Komponenten des Stereomikroskops zur Erzeugung und Erfassung eines hochauflösenden Laser-Speckle-Musters auf der Oberfläche der untersuchten Probe genutzt werden.

Nach einer Ausführungsform weist die Vorrichtung weiterhin eine Datenverarbeitungseinheit auf, welche dazu eingerichtet ist, den durch den Detektor erfassten reflektierten Laserstrahl derart zu verarbeiten, dass ein Bild generiert wird. Dadurch können aus dem Teil des reflektierten Laserstrahls, welcher durch den Detektor erfasst wird, Bilder mit Speckle-Mustern zur Charakterisierung der Oberfläche generiert werden. Speckle-Muster sind eine räumliche Struktur mit zufällig verteilten Intensitätsminima und -maxima und tragen in sich Informationen über die 2D- und die 3D-Beschaffenheit der Oberfläche. Speckle-Muster erlauben eine weite Anwendungsbreite hinsichtlich der Materialien und deren Eigenschaften. Diese Anwendungen sind dem Fachmann aus dem Stand der Technik bekannt. Insbesondere kann der Laser dazu eingerichtet sein, die Oberfläche der Probe mit einem gepulsten inzidenten Laserstrahl zu bestrahlen.

Im Sinne der vorliegenden Beschreibung bedeutet "gepulst", dass der Laser Laserstrahlen mit einer Frequenz von circa 0,1 Hz bis circa 100 kHz emittiert. In anderen Ausführungsformen der Erfindung kann der Laser Laserstrahlen mit einer Frequenz von circa 1 Hz bis circa 10 kHz emmitieren. In wiederum anderen Ausführungsformen der Erfindung kann der Laser Laserstrahlen mit einer Frequenz von von circa 10 Hz bis circa 1 kHz emmitieren. In nochmals anderen Ausführungsformen der Erfindung kann der Laser Laserstrahlen mit einer von circa 100 Hz bis circa 500 Hz emittieren.

Vorzugsweise weist die Vorrichtung ferner eine Bildanalyseeinheit auf, die dazu eingerichtet ist, die Bilder, welche von der Datenverarbeitungseinheit generiert werden, zu analysieren. Dadurch können zeitlich aufgelösten Speckle-Muster durch den Detektor erfasst werden. Diese dienen dazu, zeitlich aufgelösten Bilder einer Probenoberfläche zu generieren. Diese Bilder können in einer dafür vorgesehenen Speichereinheit gespeichert werden.

Die Bildanalyseeinheit kann verschiedene Analysen an einem oder mehreren Bildern vornehmen. Zum Beispiel können zeitaufgelösten Änderungen eines Speckle-Musters von der Oberfläche der Probe aufgenommen werden, so dass eine Korrelation auf Werkstoffkenngrößen bei entsprechender Auswertung möglich ist. Um diese Kenngrößen zu ermitteln, wird anhand von Referenzwerten, Prozessrandbedingungen und Werkstoffkennwerten ein Korrelationsmodell aufgestellt, dessen Algorithmen prozessbeschreibende Parameter wiedergeben. Dadurch kann die Bildanalyseeinheit zur Echtzeit-Überwachung verwendet werden und verfügt über eine hohe Empfindlichkeit sowohl für out-of-plane und in-plane Verformungen, denn die LSP kann die räumlich-zeitliche Dynamik der Speckle messen, die durch die Intensitätsänderung der durch den Detektor erfassten reflektierten Laserstrahlen hervorgerufen wird.

Die Bildanalyseeinheit kann dazu eingerichtet sein, die durch die Datenverarbeitungseinheit generierten Bilder durch herkömmliche Bildverarbeitungsmethoden, wie z. B. Schwellenwertverfahren, Kantendetektionsverfahren, Blob-Analyseverfahren und Template-Matching-Verfahren, auszuwerten. Die Wahl eines Algorithmus oder der Kombination von Algorithmen wird auf der Grundlage der Bedingungen der untersuchten Oberflächen getroffen. Darüber hinaus kann die Bildanalyseeinheit Modelle zur Objekterkennung, wie z. B. YOLO, Faster R-CNN, Mask R-CNN und Cascade R-CNN, verwenden, um Fremdkörper auf der untersuchten Oberfläche erkennen zu können.

Beispielsweise kann die Bildanalyseeinheit in einem Bild, welches durch die Datenverarbeitungseinheit generiert wird, die Speckle-Größe durch die Halbwertsbreite der normierten Autokorrelationsfunktion gemäß der Gleichung (1) berechnen.

$$AC = FT^{-1}(FT[I_{i,j}(\tau)] \cdot \{ FT[I_{i,j}(\tau)]\}*)\qquad(1)$$

wobei:

AC     die Autokorrelation ist;
I     die Intensität eines Pixels ist;
i,j     die Koordinaten des Pixels auf dem Bild sind;
$\tau$     die Zeitverschiebung ist;
FT     die Fourier-Transformation ist; und
*     die Konjugation ist.

Die Autokorrelation eines Signals ist als die Fourier-Transformation der Leistungsdichte des Signals definiert. Dadurch können das Leistungsspektrum des Speckle-Bilds und das umgekehrte (inverse) Leistungsspektrum berechnet werden, um im Anschluss die Autokorrelation zu erhalten.

Darüber hinaus kann die Bildanalyseeinheit auch die Entropie des Histogramms eines der durch die Datenverarbeitungseinheit generierten Bilder gemäß Gleichung (2) auswerten.

$$E_{nt} = \sum_{i=g_{max}}^{i=g_{max}} h(i) \log_2 h(i)\qquad(2)$$

wobei:

h(i)     die Häufigkeit ist; und
g     der Grauwert ist.

Darüber hinaus können die Bilder auch mit Hilfe der sogenannten Grauwertübergangsmatrix (wie gray level cooccurence matrix (GLCM)) ausgewertet werden. Die Grauwertübergangsmatrix ist eine Bildverarbeitungsmethode zur Texturanalyse. Typische Kenngrößen dieser Auswertung sind:

Energie

$$E_{ngy} = -\sum_{m,n} G_{mn}^2\qquad(3)$$

Korrelation

$$C_r = \frac{\sum_{m,n}(m-u_x)(n-u_y)G_{mn}}{s_x s_y}\qquad(4)$$

Homogenität

$$H_m = \sum_{m,n} \frac{1}{1+(m-n)^2} G_{mn}\qquad(5)$$

Kontrast

$$C_t = \sum_{m,n}(m-n)^2 G_{mn}\qquad(6)$$

wobei:

m,n     die Zeilen- und Spaltennummer der GLCM sind;
$G_{mn}$     der Eintrag der GLCM ist;

$$u_x = \sum_{m,n} m G_{mn}\qquad(7)$$

$$u_y = \sum_{m,n} n G_{mn} \qquad (8)$$

$$S_x = \sqrt{\sum_{m,n}(m - u_x)^2 G_{mn}} \qquad (9)$$

$$S_y = \sqrt{\sum_{m,n}(n - u_y)^2 G_{mn}} \qquad (10)$$

Die Energie $E_{ngy}$ liefert die Summe der quadrierten Elemente in der GLCM, die auch als zweites Winkelmoment bezeichnet wird. Die Korrelation Cr misst die gemeinsame Auftretenswahrscheinlichkeit der angegebenen Pixelpaare. Die Homogenität $H_m$ misst die Nähe der Verteilung der Elemente in der GLCM zur GLCM-Diagonalen, und der Kontrast Ct misst die lokalen Variationen in der GLCM.

Ferner kann die Bildanalyseeinheit auch dazu eingerichtet sein, die Standardabweichung D der Grauwerte der erfassten Speckle-Muster als statischer Parameter gemäß der Gleichung 11 zu berechnen:

$$D = \sqrt{\frac{\sum_{i,j}(I_{ij} - \bar{I})^2}{N - 1}} \qquad (11)$$

N ist die Gesamtzahl der Pixel des erfassten Speckle-Musters und $\bar{I}$ ist der durchschnittlicher Grauwert aller Pixel.

Die oben beschriebenen aus dem statischen Speckle-Muster berechneten Parameter können mit den topologischen Eigenschaften (z. B. der Rauheit) der zu untersuchenden Probe korreliert werden.

Gemäß einer Ausführungsform weist die Vorrichtung ferner eine Bildanzeigeeinheit auf, welche dazu eingerichtet ist, das Bild anzuzeigen. Dadurch können die generierten Bilder visualisiert werden, sodass die aufgezeichneten Muster durch einen Benutzer der Vorrichtung ausgewertet werden können.

Gemäß einer Ausführungsform kann die Vorrichtung ferner eine Lichtquelle aufweisen, die dazu eingerichtet ist, die Oberfläche der Probe mit inkohärentem Licht zu bestrahlen. Dadurch können zum einem Referenzbilder der Oberfläche der Probe aufgenommen werden und zum anderen kann die Lichtquelle dazu benutzt werden, um den Laser und/oder den Detektor zu fokussieren. Die Lichtquelle kann also zur Unterstützung der Messung und/oder zur zusätzlichen Charakterisierung der Oberfläche durch die Vorrichtung verwendet.

Gemäß einer Ausführungsform weist die Vorrichtung ferner eine Steuereinrichtung auf, die dazu eingerichtet ist, den Laser und die Lichtquelle abwechselnd einzuschalten. Dadurch kann die Einstellung des Fokus für den Laser bzw. für den Detektor und/oder die Aufnahme von Referenzbildern automatisiert werden.

Gemäß einer Ausführungsform kann die Steuereinheit dazu eingerichtet sein, den Laser und die Lichtquelle abwechselnd für jeweils zwischen etwa 1 μs und etwa 1 s einzuschalten. Gemäß einer anderen Ausführungsform kann die Steuereinheit dazu eingerichtet sein, den Laser und die Lichtquelle abwechselnd für jeweils etwa 1 μs und etwa 1 ms einzuschalten. Gemäß wiederum einer anderen Ausführungsform kann die Steuereinheit dazu eingerichtet sein, den Laser und die Lichtquelle abwechselnd für jeweils etwa 1 ms und etwa 1 s einzuschalten.

Eine kürzere Einschaltzeit zwischen 1 μs and 1 ms kann beispielweise bei einer Inline-Inspektion vorteilhaft sein. Eine Inline-Inspektion ist eine Inspektion die an Produkte vorgenommen wird, welche von einem Förderband zu der Vorrichtung kontinuerlich gefördert werden. In diesem Fall sind kurze Einschaltzeiten vorteilhaft, um höhe Förderraten zu ermöglichen. Nach einer Ausführungsform kann die Steuereinheit dazu eingerichtet sein, den Laser und die Lichtquelle abwechselnd für jeweils etwa 10 μs und etwa 100 μs einzuschalten. Nach einer Ausführungsform kann die Steuereinheit dazu eingerichtet sein, den Laser und die Lichtquelle abwechselnd für jeweils etwa 20 μs und etwa 90 μs einzuschalten. Nach einer Ausführungsform kann die Steuereinheit dazu eingerichtet sein, den Laser und die Lichtquelle abwechselnd für jeweils etwa 30 μs und etwa 80 μs einzuschalten. Nach einer Ausführungsform kann die Steuereinheit dazu eingerichtet sein, den Laser und die Lichtquelle abwechselnd für jeweils etwa 40 μs und etwa 70 μs einzuschalten. Nach einer Ausführungsform kann die Steuereinheit dazu eingerichtet sein, den Laser und die Lichtquelle abwechselnd für jeweils etwa 45 μs und etwa 55 μs einzuschalten.

Eine längere Einschaltzeit zwischen 1 ms and 1 s kann beispielweise bei einer Offline-Inspektion vorteilhaft sein. Eine Offline-Inspektion ist eine Inspektion die von einem Nutzer der Vorrichtung an einzelne Produkte vorgenommen wird, ohne dass diese von einem Förderband gefördert werden. In diesem Fall sind längere Einschaltzeiten vorteilhaft, um längere Belichtungszeiten und, dadurch, detailliertere Specle-Muster zu ermöglichen. Nach einer Ausführungsform kann die Steuereinheit dazu eingerichtet sein, den Laser und die Lichtquelle abwechselnd für jeweils etwa 10 ms und etwa 100 ms einzuschalten. Nach einer Ausführungsform kann die Steuereinheit dazu eingerichtet sein, den Laser und die Lichtquelle abwechselnd für jeweils etwa 20 ms und etwa 90 ms einzuschalten. Nach einer Ausführungsform kann die Steuereinheit dazu eingerichtet sein, den Laser und die Lichtquelle abwechselnd für jeweils etwa 30 ms und etwa 80 ms einzuschalten. Nach einer Ausführungsform kann die Steuereinheit dazu eingerichtet sein, den Laser und die Lichtquelle abwechselnd für jeweils etwa 40 ms und etwa 70 ms einzuschalten. Nach einer Ausführungsform kann die Steuereinheit dazu eingerichtet sein, den Laser und die Lichtquelle abwechselnd für jeweils etwa 45 ms und etwa 55 ms einzuschalten.

Nach einer Auführungsform kann die Steuereinheit dazu eingerichtet sein, den Laser und die Lichtquelle abwechselnd für jeweils etwa 0,1 ms und etwa 100 ms einzuschalten. Nach einer Auführungsform kann die Steuereinheit dazu eingerichtet sein, den Laser und die Lichtquelle abwechselnd für jeweils etwa 0,2 ms und etwa 50 ms einzuschalten. Nach einer Auführungsform kann die Steuereinheit dazu eingerichtet sein, den Laser und die Lichtquelle abwechselnd für jeweils etwa 0,3 ms und etwa 25 ms einzuschalten.

Gemäß einer Ausführungsform ist der Detektor ein CCD oder ein CMOS-Sensor. Dadurch können gewöhnliche Detektoren für die Erfassung der reflektierten Laserstrahlen eingesetzt werden.

Gemäß einer Ausführungsform weist der Detektor eine Aufzeichnungsrate von etwa 0,001 Hz bis etwa 100 kHz auf. In einer anderen Ausführungsform weist der Detektor eine Aufzeichnungsrate von etwa 0,01 Hz bis etwa 10 kHz auf. In wiederum einer anderen Ausführungsform weist der Detektor eine Aufzeichnungsrate von etwa 0,1 Hz bis etwa 1 kHz auf. In wiederum einer anderen Ausführungsform weist der Detektor eine Aufzeichnungsrate etwa 10 Hz bis etwa 100 Hz auf.

Gemäß einer Ausführungsform ist der Detektor ein zweidimensionaler Sensor. Dadurch können zweidimensionale Bilder bzw. Muster mit geringem Aufand erfasst werden.

Gemäß einer Ausführungsform weist die Vorrichtung ferner eine Probenhalterung auf. Dadurch kann die Probe, deren Oberfläche charakterisiert wird, sicher aufgenommen und gehalten werden.

Gemäß einer Ausführungsform ist die Probenhalterung dazu konfiguriert, die Probe aus einem Fördersystem zu entnehmen und/oder die Probe auf einem Fördersystem zu analysieren. Dadurch kann die Vorrichtung bei einem in-Line Verfahren angewendet werden, bei dem die Charakterisierung der Oberfläche in dem Produktionsverfahren integriert ist, oder bei einem off-line Verfahren, bei dem die Oberfläche als Instandhaltungsmaßnahme charakterisiert wird.

Gemäß einer Ausführungsform weist der Laserstrahl eine Wellenlänge zwischen circa 261 nm und circa 1700 nm auf. In einer anderen Ausführungsform weist der Laserstrahl eine Wellenlänge zwischen etwa 261 nm und etwa 500 nm auf. In wiederum einer anderen Ausführungsform weist der Laserstrahl eine Wellenlänge zwischen circa 500 nm und circa 750 nm auf. In wiederum einer anderen Ausführungsform weist der Laserstrahl eine Wellenlänge zwischen 750 nm und circa 1000 nm auf In wiederum einer anderen Ausführungsform weist der Laserstrahl eine Wellenlänge zwischen circa 100 nm und circa 1700 nm auf.

In einigen Ausführungsformen kann der Laser ein UV-Laser mit einer Wellenlänge zwischen circa 261 nm und circa 355 nm oder ein sichtbarer Laser mit einer Wellenlänge zwischen circa 500 nm und circa 520 nm oder ein sichtbarer Laser mit einer Wellenlänge zwischen circa 380 nm und circa 780 nm oder ein IR-Laser mit einer Wellenlänge zwischen circa 780 nm und circa 1000 nm sein.

Gemäß einer Ausführungsform ist die Lichtquelle für inkohärentes Licht eine LED oder eine Superlumineszenzdiode oder eine Leuchtstofflampe. In einigen Ausführungsformen der Erfindung kann die Lichtquelle für inkohärentes Licht eine Ringleuchte sein, welche die zumindest eine gemeinsame Linse ringförmig umgibt.

Gemäß einer Ausführungsform weist das Verfahren die folgenden weiteren Schritte auf:

c2) Verarbeiten des durch den Detektor erfassten reflektierten Laserstrahls zu einem Datensatz;

d) Erstellen eines Bildes aufgrund des Datensatzes.

Gemäß einer Ausführungsform weist das Verfahren den folgenden weiteren Schritt auf:
a2) Beleuchten der Oberfläche der Probe mit einem inkohärenten Lichtstrahl.

Gemäß einer Ausführungsform erfolgt das Bestrahlen der Oberfläche mit dem inzidenten Laserstrahl und das Beleuchten der Oberfläche mit dem inkohärenten Lichtstrahl alternierend.

Gemäß einer Ausführungsform kann die Oberfläche der Probe nur mit dem inkohärenten Lichtstrahl beleuchtet bzw. bestrahlt werden.

Gemäß einer Ausführungsform kann die Oberfläche der Probe sowohl mit dem inzidenten Laserstrahl als auch mit dem inkohärenten Lichtstrahl beleuchtet bzw. bestrahlt werden. Dies kann gleichzeitig oder alternierend erfolgen.

Bei der vorliegenden Erfindung können sämtliche strukturelle Merkmale auch Teil eines Verfahrensanspruchs sein und sämtliche verfahrenstechnische Merkmale Teil eines Sachanspruches sein.

Nachfolgend soll die Erfindung anhand von Figuren ohne Beschränkung des allgemeinen Erfindungsgedankens näher erläutert werden. Dabei zeigt:

Figur 1 eine Vorrichtung gemäß einer Ausführungsform der vorliegenden Erfindung.

Figur 2 zeigt ein Flussdiagramm eines Verfahrens gemäß einer Ausführungsform der Erfindung.

Figur 3 zeigt eine Kalibriermessung einer Probe mit Korrelation zwischen der Oberflächenrauheit der Oberfläche der Probe und der Entropie des Histogramms des Speckle-Musters der Oberfläche der Probe.

Figur 4 zeigt Speckle-Muster, die auf zwei ProbenOberflächen mit unterschiedlichem Poliergrad erzeugt wurden.

Figur 5a zeigt Speckle-Muster einer Probe, welche aus einer dünnen Kupferfolie (circa 20 pm) besteht, wobei eine Hälfte der Probe mit einer Harzschicht überzogen ist.

Figur 5b zeigt die Ergebnisse der Berechnung der Speckle-Parameter für mehrere Proben gemäß der Figur 5a mit bzw. ohne Harzschicht.

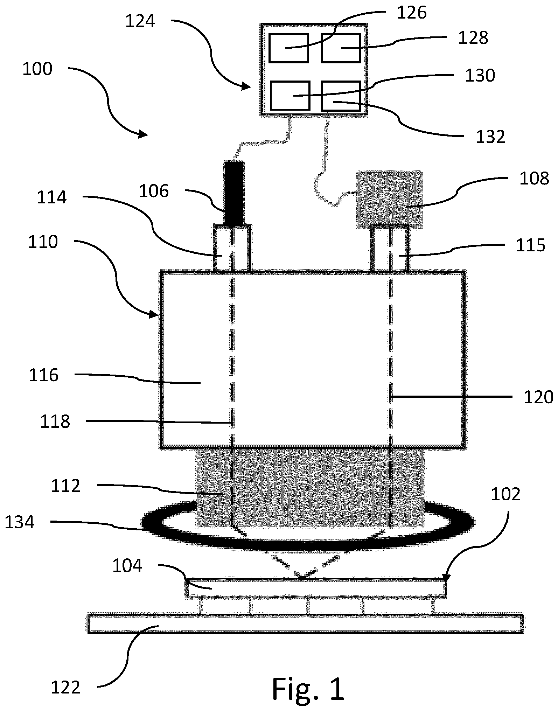

Figur 1 zeigt eine Vorrichtung 100 zur Charakterisierung einer Oberfläche 102 einer Probe 104 gemäß einer Ausführungsform der vorliegenden Erfindung.

Die Vorrichtung 100 weist zumindest einen Laser 106, zumindest einen Detektor 108 und ein Stereomikroskopsystem 110 mit zumindest einer gemeinsamen Linse 112 auf.

Der Laser 106, welcher zum Beispiel ein UV-Laser, ein sichtbarer Laser, beispielsweise ein Grünlaser, oder ein IR-Laser sein kann, ist an einem ersten Okularkanal 114 des Stereomikroskopsystems 110 angeschlossen. An einem zweiten Okularkanal 115 ist der Detektor 108 angeschlossen. Der erste Okularkanal 114 und der zweite Okularkanal 115 sind an einem optischen System 116, beispielsweise einem Körper des Stereomikroskopsystems 110, angeordnet. Die gemeinsame Linse 112 ist auf der dem ersten Okularkanal 114 gegenüberliegenden Seite des optischen Systems 116 angeordnet. Das optische System 116 kann beispielsweise eine oder mehrere Linsen zur Lenkung und/oder Fokussierung eines inzidenten oder reflektierten Laserstrahls umfassen.

Der Laser 106 emittiert einen inzidenten Laserstrahl 118, welcher durch den ersten Okularkanal 114, durch das optische System 116 und die gemeinsame Linse 112 so gelenkt wird, dass der inzidente Laserstrahl 118 zumindest einen Teilbereich der Oberfläche 102 bestrahlt bzw. beleuchtet.

Der inzidente Laserstrahl 118 wird durch die raue Oberfläche 102 der Probe 104 gestreut, sodass ein Interferenzmuster (Speckle-Muster) entsteht. Dieser wird als reflektierter Laserstrahl 120 durch die gemeinsame Linse 112, das optische System 116 und den zweiten Okularkanal 115 zum Detektor 108 gelenkt.

Der Detektor 108 erfasst den reflektierten Laserstrahl 120. Der Detektor 108 kann ein CMOS-Sensor oder ein CCD-Sensor sein oder einen solchen enthalten. Ferner kann der Detektor 108 ein zweidimensionaler Sensor oder ein eindimensionaler Sensor (Zeilensensor) sein.

Der optische Weg des inzidenten Laserstrahl 118 und der optische Weg des reflektierten Laserstrahl 120 durch das optische System 116 können weitere gemeinsamen Linsen aufweisen.

Ferner weist die Vorrichtung 100 eine Probenhalterung 122 auf, welche dazu eingerichtet ist, die Probe 104 während der Charakterisierung der Oberfläche 102 zu halten und, gegebenenfalls, die Probe 104 aus einem hier nicht näher gezeigten Fördersystem zu entnehmen. In einigen Ausführungsformen kann die Probenhalterung 122 Teil eines Fördersystems einer Produktionsanlage sein, so dass eine Messung in der laufenden Fertigung möglich ist. Dadurch ist sowohl eine in-line als auch eine off-line Charakterisierung der Oberfläche 102 möglich, zum Beispiel für die Ermittlung einer Änderung des Oberflächenzustands der Oberfläche 102.

Vor der Messung des Speckle-Bildes durch Einschalten des Lasers und erfassen des reflektierten Laser¬strahls 120 kann der Fokus durch Einstellen des Abstandes zwischen der zumindest einen gemeinsamen Linse 112 und der Oberfläche der Probe eingestellt werden. Aufgrund des konfokalen Aufbaus mit zumindest einer gemeinsamen Linse 112 wird das Einstellen der Fokuslage wesentlich vereinfacht, weil der Fukus des inzidenten Laserstrahls und der Fokus des Detektors gleichzeitig beeinflusst werden.

Die Vorrichtung 100 weist ferner einen Rechner 124 mit einer Datenverarbeitungseinheit 126, eine Speichereinheit 128, eine Bildanalyseeinheit 130 und ein Steuereinheit 132 auf.

Die Datenverarbeitungseinheit 126 kann dazu eingerichtet sein, Datensätze aus dem durch den Detektor 108 erfassten reflektierten Laserstrahl 120 zu generieren und diese Datensätze in der Speichereinheit 128 als Bild zu speichern. Diese Bilder können einem Nutzer durch eine hier nicht näher gezeigte Bildanzeigeeinheit, wie zum Beispiel einen Monitor, gezeigt werden.

Die Bildanalyseeinheit 130 kann dazu eingerichtet sein, die Bilder, welche in der Speichereinheit 128 gespeichert sind, zu analysieren und aus dieser Information über die Oberflächeneigenschaften der Oberfläche 102 zu entnehmen.

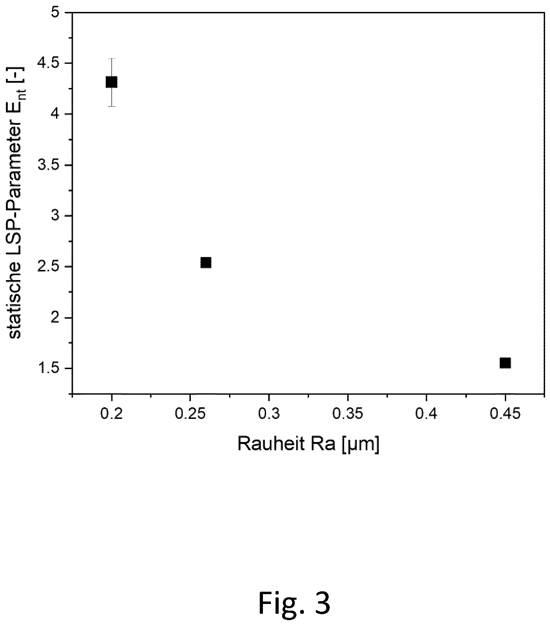

Beispielsweise kann die Bildanalyseeinheit 130 eine Kalibriermessung eines LSP-Verfahrens für die Oberfläche 102 durchführen und dabei eine Korrelation zwischen der Oberflächenrauheit der Oberfläche 102 und der Entropie $E_{nt}$ des Histogramms der Bilder generieren. Die Entropie $E_{nt}$ des Histogramms der Bilder ist anhand der Gleichung (2) ermittelt. Eine solche Kalibriermessung mit Korrelation zwischen der Oberflächenrauheit der Oberfläche 102 und der Entropie $E_{nt}$ des Histogramms der Bilder ist in Figur 3 gezeigt. Die Kalibriermessung wurde an Batterieelektrodenproben (Graphit auf Kupferfolie) durchgeführt. Die Referenz-Oberflächenrauheit der Oberfläche 102 der Probe 104 wurde mit Hilfe der Infinite-Fokus-Mikroskopie bestimmt. Die Ergebnisse zeigen, dass die LSP-Parameter monoton mit der Oberflächenrauheit korreliert sind.

Die Steuereinheit 132 kann dazu eingerichtet sein, den Laser 106 und den Detektor 108 zu steuern. Insbesondere kann die Steuereinheit 132 die Aufzeichnungsrate des Detektors 108 bestimmen. Diese kann zwischen circa 0,001 Hz bis circa 100 kHz liegen.

Die Vorrichtung 100 zeigt auch eine Lichtquelle 134 auf, welche LED oder eine Superlumineszenzdiode oder eine Leuchtstofflampe sein kann, und welche dazu eingerichtet ist, die Oberfläche 102 der Probe 104 mit einem hier nicht näher gezeigten inkohärentem Lichtstrahl zu bestrahlen. Dieser dient einerseits dazu, Referenzbilder der Oberfläche 102 der Probe 104 mittels des Detektors 108 aufzunehmen und anderseits um sowohl der inzidente Laserstrahl 118 auf der Oberfläche 102 als auch der reflektierte Laserstrahl 120 auf dem Detektor 108 fokussieren zu können. Hierfür wird das optische System 116 durch die Steuereinheit 132 kontrolliert und gesteuert.

Die Steuereinheit 132 kann ebenfalls dazu eingerichtet sein, den Laser 108 und die Lichtquelle 134 abwechselnd einzuschalten, insbesondere mit Zeitintervallen zwischen circa 0,01 ms und circa 1 ms und/oder zwischen circa 0,05 ms und circa 0,5 ms und/oder zwischen circa 0,1 ms und circa 0,3.

Nach einer Ausführungsform erzeugt Steuereinheit 132 erzeugt Trigger-Signale für den Laser 106, die Lichtquelle 134, den Detektor 108 und das optische System 116 in einer vordefinierten Reihenfolge, wenn sie ein Eingangssignal erhält. Das Eingangssignal der Steuereinheit 132 kann entweder von einem Nutzer der Vorrichtung 100 für eine Offline-Inspektion oder von einer Maschine oder einem Encoder bei einer Inline-Inspektion gesendet werden.

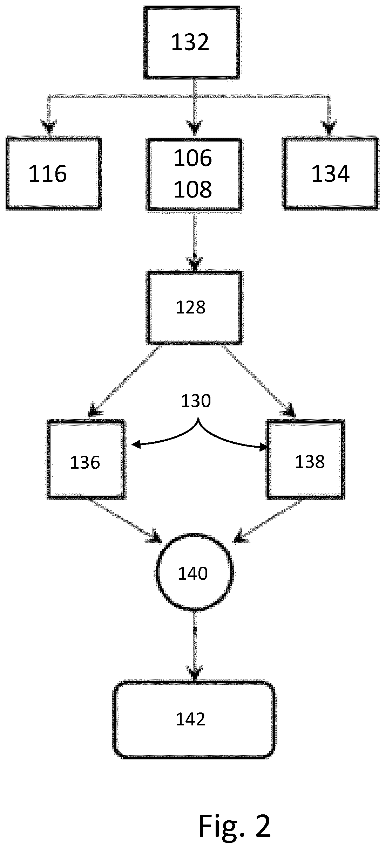

Die Figur 2 zeigt ein Flussdiagramm eines Verfahrens gemäß einer Ausführungsform der Erfindung.

Die Steuereinheit 132 erzeugt Trigger-Signale für den Laser 106, die Lichtquelle 134, den Detektor 108 und das optische System 116 in einer vordefinierten Reihenfolge, wenn sie ein Eingangssignal erhält. Das Eingangssignal der Steuereinheit 132 kann entweder vom Prüfer im Sinne einer off-line Inspektion oder von einer Maschine oder einem Encoder im Sinne einer in-line Inspektion gesendet werden. Die von dem Detektor 108 als reflektierte Laserstrahlen aufgenommenen Messdaten werden in der Speichereinheit 128 gespeichert.

Die Messdaten werden an verschiedene Operationsmodule der Bildanalyseeinheit 130 für die weiteren Auswertung weitergeleitet. Diese Module können beispielweise ein erstes Modul 136 für die statischen Auswertungen mit Speckle-Parametern gemäß den Gleichungen (1) bis (11) und ein zweites Modul 138 für die Bildverarbeitungs- bzw. KI-Auswertungen umfassen.

Das erste und das zweite Modul 136, 138 können parallel laufen, indem sie eine einzige Messdatei verwenden. Die Ergebnisse beider Operationsmodule werden an eine LSP-Datenbank 140 gesendet, um alle von derselben Messposition erhaltenen Ergebnisse zusammenzuführen.

Die Endergebnisse der Auswertung in Form von Bildern oder Mustern werden an die Bildanzeigeeinheit 142 übertragen, um die Ergebnisse in Echtzeit anzuzeigen. Falls erforderlich, kann ein Deep-Learning-Modul in die LSP-Datenbank 140 integriert werden, um die Qualität der getesteten Proben zu klassifizieren, und es kann auch ein Feedback-Signal an die Vorrichtung 100 liefern, um die Prozessparameter im Hinblick auf die Inline-Anwendung zu optimieren.

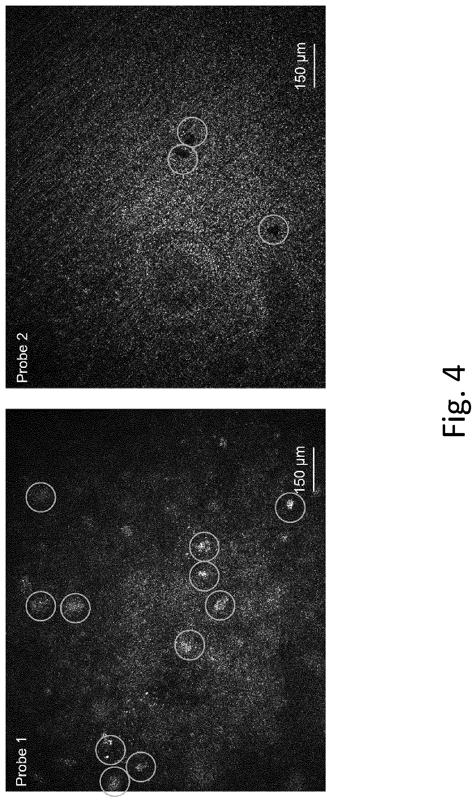

Figur 4 zeigt Speckle-Muster, die auf zwei Probenoberflächen mit unterschiedlichem Poliergrad erzeugt wurden. Anhand der Beobachtung der Fleckenmuster kann der Poliergrad qualitativ unterschieden werden. Die Defekte/Inhomogenitäten auf den Oberflächen zeigen kontraststeigernde Merkmale (eher weiß oder schwarz), die auf den Bildern markiert werden.

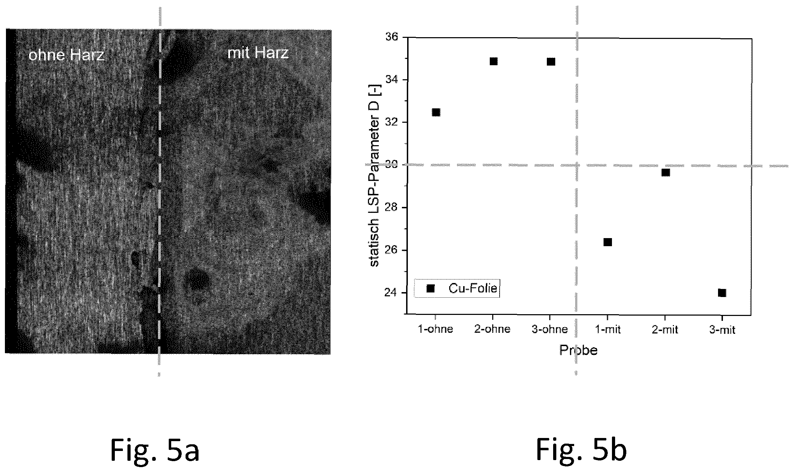

Figur 5a zeigt ein Speckle-Muster einer Probe, welche aus einer dünnen Kupferfolie (circa 20 pm) besteht, wobei eine Hälfte der Probe mit einer Harzschicht überzogen ist.

Figur 5b zeigt die Ergebnisse der Berechnung der Speckle-Parameter für mehrere Proben gemäß der Figur 5a mit bzw. ohne Harzschicht. Die Ergebnisse zeigen, dass anhand der Speckle-Parameter der Probenbereich mit Harzschicht von dem Probenbereich ohne Harzschicht unterschieden werden kann. In der Figur 5b wird die Standardabweichung D der Grauwerte für die erfassten Speckle-Muster mehrerer Proben mit oder ohne Harzschicht ermittelt.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Aus-führungsformen definieren, so dient diese Bezeichnung der Unterscheidung zweier gleichartiger Ausführungsformen, ohne eine Rangfolge festzulegen.

**Patentansprüche**

**1.** Vorrichtung (100) zur Charakterisierung einer Oberfläche (102) einer Probe (104) enthaltend:

einen Laser (106), welcher dazu eingerichtet ist, die Oberfläche (102) der Probe (104) mit einem inzidenten Laserstrahl (118) zu bestrahlen;

einen Detektor (108), welcher dazu eingerichtet ist, zumindest einen Teil des von der Oberfläche (102) der Probe (104) reflektierten Laserstrahls (120) zu erfassen;

**dadurch gekennzeichnet, dass**

die Vorrichtung (100) weiterhin zumindest eine gemeinsame Linse (112 aufweist,

wobei der inzidente Laserstrahl (118) und der reflektierte Laserstrahl (120) jeweils durch die gemeinsame Linse (112) gelenkt werden.

2. Vorrichtung (100) nach Anspruch 1, weiterhin enthaltend eine Datenverarbeitungseinheit (126), welche dazu eingerichtet ist, den durch den Detektor (108) erfassten reflektierten Laserstrahl (120) derart zu verarbeiten, dass ein Bild generiert wird.

3. Vorrichtung (100) nach Anspruch 2 ferner aufweisend eine Bildanzeigeeinheit (142), welche dazu eingerichtet ist, das Bild anzuzeigen.

4. Vorrichtung (100) nach einem der vorherigen Ansprüche ferner aufweisend eine Lichtquelle (134), die dazu eingerichtet ist, die Oberfläche (102) der Probe (104) mit einem inkohärenten Lichtstrahl zu bestrahlen.

5. Vorrichtung (100) nach Anspruch 4, weiterhin enthaltend eine Steuereinrichtung (132), die dazu eingerichtet ist, den Laser (106) und die Lichtquelle (134) abwechselnd einzuschalten.

6. Vorrichtung (100) nach Anspruch 5, **dadurch gekennzeichnet, dass** die Steuereinheit (132) dazu eingerichtet ist, den Laser (106) und die Lichtquelle (134) abwechselnd jeweils zwischen 0,01 ms und 1 ms einzuschalten oder dass die Steuereinheit (132) dazu eingerichtet ist, den Laser (106) und die Lichtquelle (134) abwechselnd jeweils zwischen 0,05 ms und 0,5 ms einzuschalten oder dass die Steuereinheit (132) dazu eingerichtet ist, den Laser (106) und die Lichtquelle (134) abwechselnd jeweils zwischen 0,1 ms und 0,3 ms einzuschalten.

7. Vorrichtung (100) nach einem der vorherigen

Ansprüche, **dadurch gekennzeichnet, dass** der Detektor (108) ein CCD oder ein CMOS-Sensor ist und/oder
dass der Detektor (108) eine Aufzeichnungsrate zwischen 0,001 Hz bis 100 kHz aufweist und/oder
dass der Detektor (108) eine Aufzeichnungsrate 0,01 Hz bis etwa 10 kHz aufweist und/oder
dass der Detektor (108) eine Aufzeichnungsrate von etwa 0,1 Hz bis etwa 1 kHz aufweist und/oder
dass der Detektor (108) eine Aufzeichnungsrate etwa 10 Hz bis etwa 100 Hz aufweist und/oder
dass der Detektor (108) ein zweidimensionaler Sensor ist.

8. Vorrichtung (100) nach einem der vorherigen Ansprüche, weiterhin enthaltend eine Probenhalterung (122) .

9. Vorrichtung (100) nach Anspruch 8, **dadurch gekennzeichnet, dass** die Probenhalterung (122) dazu konfiguriert ist, die Probe (104) von einem Fördersystem zu entnehmen und/oder

dass die Probenhalterung (122) dazu konfiguriert ist, die Probe (104) auf einem Fördersystem zu fixieren und/oder
dass die Probenhalterung (122) Teil eines Fördersystems ist.

10. Vorrichtung (100) nach einem der vorherigen

Ansprüche, **dadurch gekennzeichnet, dass** der Laserstrahl (106) eine Wellenlänge zwischen 261 nm und 1700 nm aufweist und/oder
dass der Laserstrahl (106) eine Wellenlänge zwischen 261 nm und 500 nm aufweist und/oder
dass der Laserstrahl (106) eine Wellenlänge zwischen 500 nm und 750 nm aufweist und/oder
dass der Laserstrahl (106) eine Wellenlänge zwischen 500 nm und 520 nm aufweist und/oder
dass der Laserstrahl (106) eine Wellenlänge zwischen 750 nm und 1000 nm aufweist.

11. Vorrichtung (100) nach einem der vorherigen

Ansprüche, wobei die Lichtquelle (134) eine LED oder eine Superlumineszenzdiode oder eine Leuchtstofflampe ist und/oder
wobei die Lichtquelle (134) eine Ringleuchte ist.

12. Verfahren zur Charakterisierung einer Oberfläche (102) einer Probe (104), wobei das Verfahren folgende Schritte aufweist:

a1) Bestrahlen der Oberfläche (102) der Probe (104) mit einem inzidenten Laserstrahl (118);
b) Erfassen zumindest eines Teils eines von der Oberfläche (102) der Probe (104) reflektierten Laserstrahls (120) mit einem Detektor (108),
**dadurch gekennzeichnet, dass**
der inzidente Laserstrahl (118) und der reflektierte Laserstrahl (120) durch zumindest eine gemeinsame Linse (112) gelenkt werden.

13. Verfahren nach Anspruch 12 ferner aufweisend:

c2) Verarbeiten des durch den Detektor (108) erfassten reflektierten Laserstrahls (120) zu einem Datensatz;
d) Erstellen eines Bildes aufgrund des Datensatzes.

14. Verfahren nach Anspruch 12 oder 13 weiterhin enthaltend:
a2) Beleuchten der Oberfläche (102) der Probe (104) mit einem inkohärenten Lichtstrahl.

15. Verfahren nach Anspruch 14, wobei das Bestrahlen der Oberfläche (102) mit dem inzidenten Laserstrahl (118) und das Beleuchten der Oberfläche (102) mit dem inkohärenten Lichtstrahl alternierend erfolgt.

Fig. 1

Fig. 2

Fig. 3

Fig. 4

Fig. 5b

Fig. 5a

Europäisches Patentamt
European Patent Office
Office européen des brevets

**EUROPÄISCHER RECHERCHENBERICHT**

Nummer der Anmeldung

EP 24 17 1354

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 33 04 780 A1 (RODENSTOCK OPTIK G [DE]) 30. August 1984 (1984-08-30) | 1,10,12 | INV. G01B11/30 |
| Y | * Seiten 5, 7, 9; Ansprüche 1, 2; Abbildungen 1, 2 * | 1-15 | G01N21/88 |
| X | B. BENDJUS ET AL: "Laser-Speckle-Photometrie - optische Sensorik zur Zustands- und Prozessüberwachung", 12. DRESDNER SENSOR-SYMPOSIUM 2015, 9. Dezember 2015 (2015-12-09), Seite 245, XP055566272, DOI: 10.5162/12dss2015/P7.8 ISBN: 978-3-9813484-9-1 | 1,7,12 | ADD. G01N21/47 |
| Y | * das ganze Dokument * | 1-15 | |
| X | JP H07 27709 A (OLYMPUS OPTICAL CO) 31. Januar 1995 (1995-01-31) | 1-6, 12-15 | |
| Y | * Absätze [0041], [0049], [0055], [0065], [0092]; Abbildung 1 * | 1-15 | |
| X | JP 6 903449 B2 (HOYA CORP) 14. Juli 2021 (2021-07-14) | 1,8,9, 11,12 | RECHERCHIERTE SACHGEBIETE (IPC) |
| Y | * Absätze [0020], [0021], [0034]; Abbildung 1 * | 1-15 | G01B G01N |
| Y | EP 4 163 624 A1 (FRAUNHOFER GES FORSCHUNG [DE]) 12. April 2023 (2023-04-12) * das ganze Dokument * | 1-15 | |

Der vorliegende Recherchenbericht wurde für alle Patentansprüche erstellt

| Recherchenort | Abschlußdatum der Recherche | Prüfer |
|---|---|---|
| München | 2. Oktober 2024 | Burkart, Johannes |

## ANHANG ZUM EUROPÄISCHEN RECHERCHENBERICHT
## ÜBER DIE EUROPÄISCHE PATENTANMELDUNG NR.

EP 24 17 1354

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-10-2024

| Im Recherchenbericht angeführtes Patentdokument | | Datum der Veröffentlichung | Mitglied(er) der Patentfamilie | | Datum der Veröffentlichung |
|---|---|---|---|---|---|
| DE 3304780 | A1 | 30-08-1984 | CH | 664438 A5 | 29-02-1988 |
| | | | DE | 3304780 A1 | 30-08-1984 |
| | | | DE | 8303856 U1 | 14-11-1985 |
| | | | FR | 2540988 A1 | 17-08-1984 |
| | | | GB | 2135772 A | 05-09-1984 |
| | | | JP | S60310 A | 05-01-1985 |
| | | | JP | H038686 B2 | 06-02-1991 |
| | | | US | 4728196 A | 01-03-1988 |
| JP H0727709 | A | 31-01-1995 | JP | 3379805 B2 | 24-02-2003 |
| | | | JP | H0727709 A | 31-01-1995 |
| JP 6903449 | B2 | 14-07-2021 | JP | 6903449 B2 | 14-07-2021 |
| | | | JP | 2018136200 A | 30-08-2018 |
| EP 4163624 | A1 | 12-04-2023 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014224852 A1